# EUROPÄISCHE PATENTANMELDUNG

(11) **EP 1 842 896 A2**
(43) Veröffentlichungstag der Anmeldung: **10.10.2007**
(21) Anmeldenummer: 07004131.4
(22) Anmeldetag: 28.02.2007
(51) Int. Cl.: C10L 5/04, C10L 5/08, C10L 5/28, C10L 5/36

(54) **Verfahren zur Herstellung von Brennstoffpresslingen unter Verwendung von Braunkohlenxylit**

(30) Priorität: 05.04.2006 DE 102006016383
(71) Anmelder: Rheinbraun Brennstoff GmbH, 50226 Frechen (DE)
(72) Erfinder: Müller, Michael, 15827 Blankenfelde-Mahlow (DE)
(74) Vertreter: Polypatent

(57) **Zusammenfassung**

Die Erfindung betrifft ein Verfahren zur Herstellung von Brennstoffpresslingen unter Verwendung von Braunkohlenxylit, umfassend die Verfahrensschritte:
- Abtrennung von Braunkohlenxylit von der teilweise mit diesem verwachsenen Braunkohle durch Zerkleinerung und Klassierung,
- Zerkleinerung und/oder Zerfaserung des Braunkohlenxylits, und
- Herstellung von Presslingen aus dem zerkleinerten Braunkohlenxylit.

Das Verfahren gemäß der Erfindung zeichnet sich dadurch aus, dass die Formgebung der Presslinge nach einer Vortrocknung des Braunkohlenxylits auf einen Wassergehalt von ≤ 25 %, vorzugsweise auf einen Wassergehalt von ≤ 12 % erfolgt.

## Beschreibung

Die Erfindung betrifft ein Verfahren zur Herstellung von Brennstoffpresslingen unter Verwendung von Braunkohlenxylit umfassend folgende Verfahrensschritte:
- Abtrennung von Braunkohlenxylit von der teilweise mit diesem verwachsenen Braunkohle durch Zerkleinerung und Klassierung,
- Zerkleinerung und/oder Zerfaserung des Braunkohlenxylits, und
- Herstellung von Presslingen aus dem zerkleinerten Braunkohlenxylit.

Ein solches Verfahren ist beispielsweise aus der DE 101 50 074 C1 bekannt. Das Verfahren umfasst in bekannter Art und Weise die Aufbereitung des Braunkohlenxylits aus der Braunkohlenförderung, die Zerkleinerung und Klassierung in Restkohle und Xylit. Der reine Braunkohlenxylit wird zu einem Faserstoff hoher Feinheit aufgeschlossen. Anschließend wird der Xylit mit einem über dem Sättigungswassergehalt liegenden Wassergehalt von etwa 50 bis 65 % zu Pellets geformt. Die Verfestigung der Pellets zu einem Brennstoff mit hoher Festigkeit und Feuerstabilität findet bei der nachfolgenden Trocknung auf Wassergehalte von ≤ 25 % statt. Bei der Zerkleinerung des Xylits wird dieser durch anhaltende mechanische Beanspruchung bei Zugabe von Wasser oder Wasserdampf bis zur Überschreitung des Sättigungswassergehaltes in eine klebrig-pastöse Masse überführt, die sich anschließend mit verhältnismäßig geringem Druck pelletieren lässt.

So hergestellte Pellets aus Braunkohlenxylit ergeben einen kleinstückigen Brennstoff mit guten Dosier- und Zündeigenschaften sowie mit einer hohen Lagerbeständigkeit. Außerdem ist ein gleichmäßiger Abbrand bei vollständiger Verbrennung, hoher Festigkeit und hoher Feuerstabilität gewährleistet.

Das in der DE 101 50 074 C1 beschriebene Verfahren zur Herstellung des Brennstoffs ist allerdings verhältnismäßig aufwändig, zumal die Trocknung wegen des hohen Feuchtigkeitsgehalts der zu pelletierenden Masse energetisch ungünstig ist. Bei der Trocknung muss verhältnismäßig viel Überschusswasser ausgetrieben werden. Das Verpressen des bis zur Sättigung angefeuchteten oder nicht vorgetrockneten Materials hat den Nachteil, dass der Wasserdampf bei der Verpressung den Pressling auseinander treibt, was zu Lasten der Festigkeit des Presslings geht.

Der Erfindung liegt daher die Aufgabe zugrunde, ein Verfahren der eingangs genannten Art zu vereinfachen sowie bzgl. der Herstellungskosten für das Erzeugnis zu minimieren.

Die Erfindung betrifft weiterhin einen großstückigen Kaminbrennstoff, der durch Extrusion in einer Extruderpresse oder durch Strangpressen von getrocknetem Braunkohlenxylit nach dem zuvor erwähnten Verfahren erhalten wurde.

Ein solcher großstückiger Kaminbrennstoff ist beispielsweise in der DE 101 50 135 A1 beschrieben.

Bei der Bereitstellung eines großstückigen Kaminbrennstoffs ist ein wichtiges Qualitätskriterium, dass dieser bei sichtbarer großer Flamme brennt und trotzdem eine entsprechende Feuerstandsfestigkeit aufweist. Der Kaminbrennstoff soll als Substitut für Kaminholz dienen. Presslinge hoher Dichte neigen wegen ihrer hohen Dichte dazu, wie ein Braunkohlenbrikett zu verglühen oder zu verglimmen. Auch spielt der Gehalt an flüchtigen Bestandteilen einer Rolle beim Abbrandverhalten. Die Verbrennung von Kaminholz beginnt beispielsweise mit einer starken Entgasungsphase, bei der ein entsprechendes Flammenbild erzeugt wird.

Um diese Eigenschaft zu gewährleisten, wird in der DE 101 50 135 A1 vorgeschlagen, den Basisrohstoff Xylit mit einem oder mehreren Naturstoffen zu vermischen, die dem Kaminbrennstoff die gewünschten Eigenschaften verleihen. Hierzu eignen sich nach DE 101 50 135 A1 beispielsweise in der Natur gewachsene biostämmige Rohstoffe, beispielsweise Getreidestroh, junges Splintholz von Weichhölzern, getrocknetes Grüngut, zerfaserte Kartonagen und Papiere sowie viele andere Ligno-Cellulosen mit ähnlicher Zusammensetzung.

Die Herstellung eines solchen großstückigen Kaminbrennstoffs unter Verwendung von Braunkohlenxylit ist ebenfalls unverhältnismäßig aufwändig.

Der Erfindung liegt daher weiterhin die Aufgabe zugrunde, einen großstückigen Kaminbrennstoff bereitzustellen, der trotz günstiger Herstellungskosten die gewünschten Abbrandeigenschaften aufweist.

Schließlich liegt der Erfindung noch die Aufgabe zugrunde, weitere Verwendungsmöglichkeiten für Presslinge aus Braunkohlenxylit bereitzustellen.

Das Verfahren zur Herstellung von Braunkohlenpresslingen unter Verwendung von Braunkohlenxylit gemäß der Erfindung zeichnet sich dadurch aus, dass die Formgebung der Presslinge nach einer Vortrocknung des Braunkohlenxylits auf einen Wassergehalt von ≤ 25 %, vorzugsweise auf einen Wassergehalt von ≤ 12 % erfolgt.

Bei intensiver Durchführung von Laborversuchen hat sich herausgestellt, dass selbst bei Vortrocknung des Braunkohlenxylits auf einen Wassergehalt von ≤ 12 %, beispielsweise bei Vortrocknung auf einen Wassergehalt von ≤ 8 %, und anschließender Herstellung der Presslinge nach dem Extruderprinzip ein Braunkohlenxylitpressling erhalten wird, der die gewünschten Eigenschaften hinsichtlich Abbrandverhalten, Dosierbarkeit und Festigkeit bzw. Schüttstabilität vollständig erfüllt. Zur Verarbeitung des zerkleinerten Xylits können elektrisch beheizte Schneckenextruderpressen Anwendung finden, die das Material durch entsprechend der Materialstärke ausgebildete Matrizen pressen.

Zweckmäßigerweise erfolgt die vorherige Trocknung des Braunkohlenxylits unter Umwälzung des Trockenguts und/oder unter Luftzufuhr, beispielsweise in einem Drehrohrtrockner. Ein solcher Drehrohrtrockner kann beispielsweise dampfbeheizt sein. Die vorherige Zerspanung des Xylits kann beispielsweise in einem Messerringzerspaner erfolgen, bei dem gegenläufige Messer das Gut in Späne zerteilen.

Bei einer Variante des Verfahrens gemäß der Erfindung ist vorgesehen, dass der Braunkohlenxylit zu kleinstückigen Pellets verpresst wird, vorzugsweise unter Verwendung einer Matrizenpresse. Die erhaltenen Presslinge können beispielsweise einen Durchmesser von 2 bis 20 mm sowie eine Länge von etwa 2 bis 20 mm aufweisen. Diese besitzen vorzugsweise eine runde Querschnittskontur.

Die Verpressung in den hierzu vorgesehenen handelsüblichen Matrizenpressen erfolgt vorzugsweise bei Drücken von bis zu 200 bar, also bei verhältnismäßig geringen Drücken.

Bei der Herstellung von großstückigen Presslingen mittels Extruderpressen kann beispielsweise, wie vorstehend beschrieben wurde, der Extruder elektrisch beheizt sein. Dabei wird das zu verpressende Material vorzugsweise auf Temperaturen zwischen 180°C und 220°C erhitzt.

Alternativ kann eine Verpressung unter Verwendung einer Strangpresse erfolgen. Dabei wird der Braunkohlenxylit vorzugsweise zu großstückigen Briketts verpresst. Diese können beispielsweise auch als Kaminbrennstoff Anwendung finden.

Erfindungsgemäß wird weiterhin ein großstückiger Kaminbrennstoff, bestehend aus einem Pressling, bereitgestellt, der durch Formgebung von getrocknetem Braunkohlenxylit nach dem vorstehend beschriebenen Verfahren erhalten wurde. Dieser Kaminbrennstoff zeichnet sich dadurch aus, dass der Pressling keine zündverbessernden oder abbrandbeschleunigenden Zuschlagstoffe enthält.

Vielmehr ist vorgesehen, die gewünschten Abbrandeigenschaften, insbesondere das Flammenspiel, über die Geometrie des Presslings zu erzielen. Hier hat sich ein vieleckiger Querschnitt, beispielsweise ein 6- oder 8-eckiger Querschnitt als besonders günstig erwiesen.

Es ist weiterhin günstig, wenn der Pressling eine diesen vorzugsweise in Längsrichtung durchsetzende Lochung aufweist. Hierdurch wird eine Erhöhung der spezifischen Oberfläche des Briketts erreicht, wodurch ein Abbrand mit Flammenspiel gewährleistet ist.

Die Braunkohlenxylit-Presslinge, die nach dem zuvor beschriebenen Verfahren erhalten wurden, eignen sich überraschenderweise hervorragend als Grundstoff für die Herstellung von Koks. Dabei hat dieser Grundstoff aufgrund seiner Herstellung ein gleichmäßiges Körnungsband, das nach der Verkokung weitestgehend erhalten bleibt, wodurch die sonst nach der Verkokung notwendige Siebklassierung entfallen kann.

Insbesondere eignet sich ein so hergestellter Koks in besonderem Maße als Substitut für Holzkohle. Die Verwendung von Holzkohle ist wegen des damit einhergehenden Holzverbrauchs aus ökologischen Gesichtspunkten kaum noch vertretbar. Darüber hinaus ist Holzkohle wegen ihrer aufwändigen Herstellung verhältnismäßig teuer. Naturgemäß liegt das verarbeitete Holz in den verschiedensten Stückgrößen von groben Ast- bzw. Stammabschnitten bis zu kleinen Ästchen vor. Bei der Herstellung der Holzkohle entsteht darüber hinaus verhältnismäßig viel Gruß bzw. Feinstaub. Für die anschließende Konfektionierung von Holzkohle muss das Unterkorn ausgehalten bzw. abgesiebt werden. Gleiches trifft für verhältnismäßig große Stücke zu.

Es ist daher besonders vorteilhaft, die zuvor beschriebenen Presslinge aus Braunkohlenxylit einer Verkokung zuzuführen und den hieraus resultierenden Koks als Holzkohlensubstitut zu verwenden. Aufgrund der physiologischen Ähnlichkeit des Xylits zur frischen Biomasse ist das resultierende Koksprodukt von seinen Eigenschaften durchaus mit Holzkohle vergleichbar.

Das Endprodukt ist insbesondere wegen des homogenen Ausgangsmaterials im Wesentlichen gleichstückig, was für die weitere Handhabung vorteilhaft ist. Gleichstückig im Sinne der Erfindung bedeutet, dass das Material ungefähr gleiche Abmessungen bzw. eine etwa gleiche Korngröße aufweist.

Der Ablauf der Herstellung von Braunkohlenxylit-Presslingen gemäß der Erfindung ist anhand des beiliegenden Fließbildes schematisch dargestellt.

Aus Gründen der Einfachheit ist die bergmännische Gewinnung des Xylits sowie die Trennung des Rohxylits von der mit diesem verwachsenen Kohle nicht dargestellt. Ausgehend von dem Rohmaterial erfolgt eine weitere Zerkleinerung des Rohxylits, die anschließende Trocknung auf eine Restfeuchtigkeit von ≤ 25 %, vorzugsweise von ≤ 12 %. Das getrocknete Material kann entweder mit Matrizenpressen pelletiert werden, oder dieses kann alternativ mit einer Extruder- oder Strangpresse brikettiert werden.

Auf die Pelletierung erfolgt eine Silobefüllung oder alternativ eine Verpackung zu Sackware. Aus dem Silo können die Pellets einer Verkokung zugeführt werden oder über eine Dosiereinrichtung einem Heizkessel zugeführt werden.

Die aus der Brikettierung erhaltenen Presslinge werden in die gewünschte Länge zersägt bzw. zerschnitten, gebündelt und gepackt. Alternativ werden die Presslinge der Verkokung zugeführt.

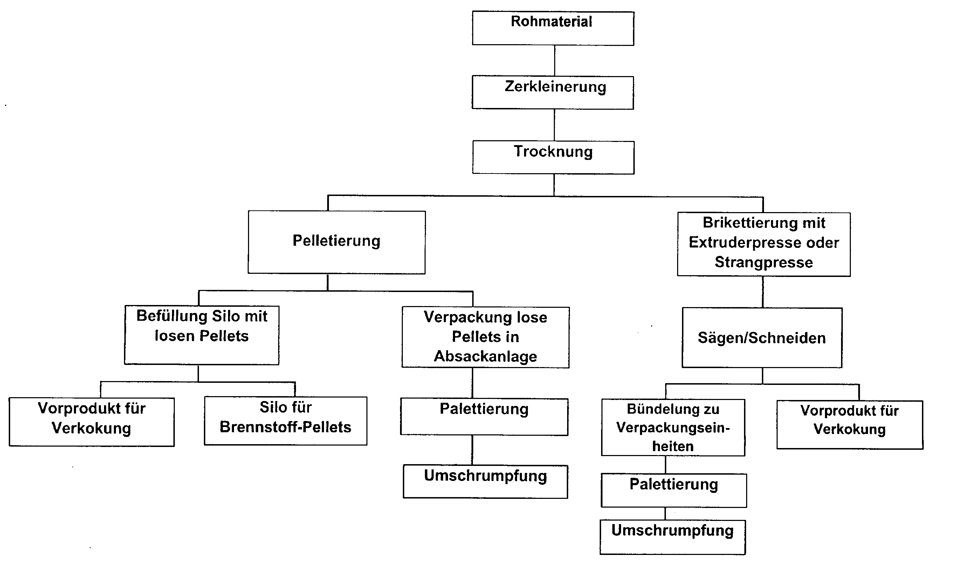

## Patentansprüche

1. Verfahren zur Herstellung von Brennstoffpresslingen unter Verwendung von Braunkohlenxylit, umfassend folgende Verfahrensschritte:
- Abtrennung von Braunkohlenxylit von der teilweise mit diesem verwachsenen Braunkohle durch Zerkleinerung und Klassierung,
- Zerkleinerung und/oder Zerfaserung des Braunkohlenxylits, und
- Herstellung von Presslingen aus dem zerkleinerten Braunkohlenxylit, **dadurch gekennzeichnet, dass** die Formgebung der Presslinge nach einer Vortrocknung des Braunkohlenxylits auf einen Wassergehalt von ≤ 25 %, vorzugsweise auf einen Wassergehalt von ≤ 12 % erfolgt.

2. Verfahren nach Anspruch 1, **dadurch gekennzeichnet, dass** der Braunkohlenxylit zu kleinstückigen Pellets verpresst wird, vorzugsweise unter Verwendung einer Matrizenpresse.

3. Verfahren nach Anspruch 1, **dadurch gekennzeichnet, dass** der Braunkohlenxylit unter Verwendung einer Extruderpresse oder Strangpresse zu Briketts verpresst wird.

4. Großstückiger Kaminbrennstoff, bestehend aus einem Pressling, der durch Formgebung von getrocknetem Braunkohlenxylit nach dem Verfahren gemäß Anspruch 3 erhalten wurde, **dadurch gekennzeichnet, dass** der Pressling keine zündverbessernden oder abbrandbeschleunigenden Zuschlagstoffe enthält.

5. Kaminbrennstoff nach Anspruch 4, **dadurch gekennzeichnet, dass** der Pressling einen mehreckigen Querschnitt, vorzugsweise einen 6- oder 8-eckigen Querschnitt aufweist.

6. Kaminbrennstoff nach Anspruch 4 oder 5, **dadurch gekennzeichnet, dass** der Pressling eine diesen vorzugsweise in Längsrichtung durchsetzende Lochung aufweist.

7. Verwendung eines Presslings aus Braunkohlenxylit, vorzugsweise eines gemäß einem der Ansprüche 1, 2 oder 3 hergestellten Presslings als Grundstoff für die Herstellung von Koks.

8. Holzkohlensubstitut als etwa gleichstückiger Koks auf der Basis von Braunkohlenxylit.
